(19) Europäisches Patentamt
European Patent Office
Office européen des brevets

(11) **EP 2 939 992 B1**

(12) **EUROPEAN PATENT SPECIFICATION**

(45) Date of publication and mention
of the grant of the patent:
**26.04.2017 Bulletin 2017/17**

(21) Application number: **13866987.4**

(22) Date of filing: **26.12.2013**

(51) Int Cl.:
*C04B 35/478* (2006.01)  *B01D 39/20* (2006.01)
*B01D 46/00* (2006.01)  *B01J 29/46* (2006.01)
*B01J 29/70* (2006.01)  *B01J 35/04* (2006.01)
*B01J 37/06* (2006.01)  *B01J 37/08* (2006.01)
*F01N 3/022* (2006.01)  *F01N 3/023* (2006.01)
*F01N 3/035* (2006.01)  *F01N 3/10* (2006.01)
*F01N 3/24* (2006.01)  *C04B 38/00* (2006.01)

(86) International application number:
**PCT/JP2013/084856**

(87) International publication number:
**WO 2014/104179 (03.07.2014 Gazette 2014/27)**

(54) **HONEYCOMB FILTER AND PRODUCTION METHOD THEREFOR**

WABENFILTER UND HERSTELLUNGSVERFAHREN DAFÜR

FILTRE EN NID-D'ABEILLES ET PROCÉDÉ DE PRODUCTION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2012 JP 2012285229**

(43) Date of publication of application:
**04.11.2015 Bulletin 2015/45**

(73) Proprietor: **Sumitomo Chemical Company,
Limited
Tokyo 104-8260 (JP)**

(72) Inventors:
• **SADAOKA, Kazuo**
  **Niihama-shi**
  **Ehime 792-8521 (JP)**
• **ANO, Yusuke**
  **Niihama-shi**
  **Ehime 792-8521 (JP)**
• **KASAI, Koji**
  **Niihama-shi**
  **Ehime 792-8521 (JP)**

(74) Representative: **Hoffmann Eitle
Patent- und Rechtsanwälte PartmbB
Arabellastraße 30
81925 München (DE)**

(56) References cited:
**EP-A1- 2 239 245      WO-A1-2005/105704
WO-A1-2009/063997   WO-A1-2011/008938
WO-A1-2011/111633   JP-A- H01 249 657
JP-A- 2009 084 064   JP-A- 2009 196 881
JP-A- 2010 116 289   JP-A- 2011 523 616
US-A1- 2007 134 138**

EP 2 939 992 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a honeycomb filter and to a method for its production, as well as to an aluminum titanate-based ceramic and a method for its production.

### Background Art

Honeycomb filters are used to remove a material to be collected in fluids that include the material to be collected, and for example, they are used as ceramic filters for collecting of fine particles such as carbon particles present in exhaust gas discharged from internal combustion engines such as diesel engines (Diesel Particulate Filters). A honeycomb filter has a plurality of mutually parallel flow channels partitioned by a partition wall, the ends of some of the plurality of flow channels and the other ends of the rest of the plurality of flow channels being closed. Examples for a honeycomb structure composing such a honeycomb filter include the structures described in Patent Literatures 1 and 2.

A diesel particulate filter may sometimes have a precious metal catalyst supported on a $\gamma$-alumina catalyst, in order to promote combustion of collected carbon particles and the like. Also, exhaust gas is usually supplied to an oxidation catalyst before being supplied to the diesel particulate filter, whereby the hydrocarbons in the exhaust gas are oxidized and removed. However, oxidation and removal of the hydrocarbons by the oxidation catalyst is often inadequate. Therefore, zeolite is sometimes loaded on the diesel particulate filter in addition to the precious metal catalyst, in order to cause adsorption and combustion of the hydrocarbons that have not been fully oxidized by the oxidation catalyst. Such a catalyst-supporting diesel particulate filter is known as a catalyzed diesel particulate filter.

Moreover, methods for decomposing $NO_x$ in exhaust gas are known, whereby $NO_x$ is decomposed by ammonia, in the reactions represented by the following chemical equations (2) to (4). This method is known as ammonia SCR (Selective Catalytic Reduction), since $NO_x$ is selectively reduced by ammonia. Ammonia can be generated by hydrolysis of urea water at high temperature, as represented by the following chemical equation (1). The method by which ammonia generated from urea is used to decompose $NO_x$ in exhaust gas is known as urea SCR.

$$CO\,(NH_2)_2 + H_2O \rightarrow 2NH_3 + CO_2 \qquad (1)$$

$$4NH_3 + 4NO + O_2 \rightarrow 4N_2 + 6H_2O \qquad (2)$$

$$2NH_3 + NO + NO_2 \rightarrow 2N_2 + 3H_2O \qquad (3)$$

$$8NH_3 + 6NO_2 \rightarrow 7N_2 + 12H_2O \qquad (4)$$

Another type of known SCR is hydrocarbon SCR, in which a hydrocarbon is used as the reducing agent.

In diesel vehicles, honeycomb structures supporting zeolite are used for efficient reduction of $NO_x$ by SCR. Furthermore, the zeolite used is metal ion-exchanged zeolite, which has been ion-exchanged with metal ions such as copper ion in order to improve the $NO_x$ reducing power. The honeycomb structure for SCR and the diesel particulate filter are configured in series to construct an exhaust gas purification system. From the viewpoint of space reduction and cost reduction, on the other hand, there has been proposed a honeycomb filter having metal ion-exchanged zeolite on the surface of a partition wall of a diesel particulate filter, thus being provided with both an SCR function and a diesel particulate filter function (see Patent Literature 3, for example).

### Citation List

### Patent Literature

[Patent Literature 1] Japanese Unexamined Patent Application Publication No. 2006-239603
[Patent Literature 2] Japanese Unexamined Patent Application Publication No. 2001-46886
[Patent Literature 3] Japanese Unexamined Patent Application Publication No. 2010-227767

Document EP 2239245 A1 discloses an aluminium magnesium titanatealumina composite ceramic containing aluminium magnesium titanate and alumina, and the elemental composition ratio of Al, Mg and Ti of the aluminium magnesium titanate-alumina composite ceramic is represented by a compositional formula (1): $Al_{2(1-x)}Mg_x$-

$Ti_{(1+x)}O_5 + aAl_2O_3$, wherein coefficient x satisfies $0 < x \leq 1$, and coefficient a satisfies $0.4x \leq a < 2x$. Furthermore, this document discloses an embodiment of said aluminium magnesium titanate-alumina composite ceramic, further containing elements Si, Na, K or Ca, and wherein the elemental composition ratio of Al, Mg, Ti, Si, Na, K and Ca of the aluminium magnesium titanate-alumina composite ceramic is represented by a compositional formula (3): $Al_{2(1-x)}Mg_xTi_{(1+x)}O_5$ $aAl_2O_3 + bSiO_2 + cNa_2O + dK_2O + eCaO$, wherein coefficient x satisfies $0 < x \leq 1$, coefficient a satisfies $0.4x \leq a < 2x$, coefficient b satisfies $0.05 \leq b \leq 0.4$, and coefficients c, d, and e satisfy $5 \leq \{(c + d + e)/b\} * 100 \leq 16.66$.

## Summary of Invention

### Technical Problem

However, honeycomb filters that support catalysts are problematic in that deterioration of their catalysts tend to occur as they are exposed to high temperatures when carbon particles or the like are removed by combustion.

It is an object of the present invention to provide a honeycomb filter that can minimize deterioration of the catalyst when exposed to high temperatures, and a method for its production, as well as an aluminum titanate-based ceramic and a method for its production.

### Solution to Problem

In order to achieve the object stated above, the invention provides a honeycomb filter comprising a partition wall forming a plurality of flow channels that are mutually parallel, and a catalyst supported on at least a portion of the surfaces of the partition wall and/or on at least a portion of the pore interiors of the partition wall, wherein the honeycomb filter has a first end face and a second end face situated on the side opposite the first end face, the plurality of flow channels comprising a plurality of first flow channels having their ends closed on the second end face side and a plurality of second flow channels having their ends closed on the first end face side, and when the elemental composition ratio of Al, Mg, Ti, Si, Na, K, Ca and Sr in the partition wall is represented by the following compositional formula (I):

$$Al_{2(1-x)}Mg_xTi_{(1+y)}O_5 + aAl_2O_3 + bSiO_2 + cNa_2O + dK_2O + eCaO + fSrO \qquad (I),$$

x satisfies the inequality $0 < x < 1$, y satisfies the inequality $0.5x < y < 3x$, a satisfies the inequality $0.1x \leq a < 2x$, b satisfies the inequality $0.05 \leq b \leq 0.4$, c and d satisfy the inequality $0 < (c + d)$, and c, d, e and f satisfy the inequality $0.5 < \{(c + d + e + f)/b\} \times 100 < 5$.

Since the partition wall has the composition specified above, the honeycomb filter can minimize deterioration of the catalyst supported on the partition wall even when the catalyst is exposed to high temperatures.

Furthermore, the honeycomb filter preferably does not exhibit a peak for a crystalline silica-containing phase in the X-ray powder diffraction spectrum for the partition wall. If the partition wall does not include a crystalline silica-containing phase, then it will be more resistant to decomposition at high temperatures and will tend to be more stable.

The catalyst in the honeycomb filter preferably includes zeolite. If the catalyst includes zeolite, then it will be possible to improve the $NO_x$ decomposing power when the honeycomb filter is used as a honeycomb filter also having an SCR function, and it will also be possible to improve the hydrocarbon adsorption performance when it is used as a catalyzed diesel particulate filter.

The invention further provides a method for producing a honeycomb filter comprising a partition wall forming a plurality of flow channels that are mutually parallel, and a catalyst supported on at least a portion of the surfaces of the partition wall and/or on at least a portion of the pore interiors of the partition wall, wherein the honeycomb filter has a first end face and a second end face situated on the side opposite the first end face, the plurality of flow channels comprising a plurality of first flow channels having their ends closed on the second end face side and a plurality of second flow channels having their ends closed on the first end face side, and when the elemental composition ratio of Al, Mg, Ti, Si, Na, K, Ca and Sr in the partition wall is represented by the following compositional formula (I):

$$Al_{2(1-x)}Mg_xTi_{(1+y)}O_5 + aAl_2O_3 + bSiO_2 + cNa_2O + dK_2O + eCaO + fSrO \qquad (I),$$

x satisfies the inequality $0 < x < 1$, y satisfies the inequality $0.5x < y < 3x$, a satisfies the inequality $0.1x \leq a < 2x$, b satisfies the inequality $0.05 \leq b \leq 0.4$, c and d satisfy the inequality $0 < (c + d)$, and c, d, e and f satisfy the inequality $0.5 < \{(c + d + e + f)/b\} \times 100 < 5$, the method for producing a honeycomb filter including a step of molding and sintering a raw mixture that includes an aluminum source, a magnesium source, a titanium source, a silicon source, a pore-forming agent, a binder and a solvent, the total amount of $Na_2O$ and $K_2O$ in the aluminum source being between 0.001 mass% and 0.25 mass% inclusive, the total amount of $Na_2O$ and $K_2O$ in the magnesium source being between 0.001 mass% and 0.25 mass% inclusive, the total amount of $Na_2O$ and $K_2O$ in the titanium source being between 0.001 mass% and 0.25 mass% inclusive and the total amount of $Na_2O$ and $K_2O$ in the silicon source being between 0.001 mass% and 0.25 mass% inclusive, to obtain a honeycomb sintered body, and a step of loading the catalyst onto at least a portion of the surfaces of the partition wall of the honeycomb sintered body and/or at least a portion of the pore interiors of the partition wall, to obtain a honeycomb filter.

By this production method it is possible to efficiently produce a honeycomb filter having the construction described above.

In the method for producing a honeycomb filter, the silicon source preferably includes $SiO_2$ at 95 mass% or greater. This will reduce the effects of impurities and facilitate control of the composition of the partition wall.

In the method for producing a honeycomb filter, the silicon source preferably includes an amorphous phase at 90 mass% or greater. This will improve the reactivity of the silicon source during production of the honeycomb filter, and facilitate production of a honeycomb filter having a uniform silicon-containing phase.

The method for producing a honeycomb filter preferably includes a step of washing the honeycomb sintered body before the catalyst is loaded. This will allow removal of the silicon-containing phase on the surface of the partition wall, while allowing deterioration of the catalyst to be further minimized.

In the method for producing a honeycomb filter, washing of the honeycomb sintered body is preferably carried out with an alkali solution having a pH of 9 or higher. This will facilitate removal of the silicon-containing phase on the surface of the partition wall.

In the method for producing a honeycomb filter, the catalyst preferably includes zeolite. If the catalyst includes zeolite, then it will be possible to improve the $NO_x$ decomposing power when the honeycomb filter is used as a honeycomb filter also having an SCR function, and it will also be possible to improve the hydrocarbon adsorption performance when it is used as a catalyzed diesel particulate filter.

The invention further provides an aluminum titanate-based ceramic wherein, when the elemental composition ratio of Al, Mg, Ti, Si, Na, K, Ca and Sr is represented by the following compositional formula (I):

$$Al_{2(1-x)}Mg_xTi_{(1+y)}O_5 + aAl_2O_3 + bSiO_2 + cNa_2O + dK_2O + eCaO + fSrO \qquad (I),$$

x satisfies the inequality $0 < x < 1$, y satisfies the inequality $0.5x < y < 3x$, a satisfies the inequality $0.1x \leq a < 2x$, b satisfies the inequality $0.05 \leq b \leq 0.4$, c and d satisfy the inequality $0 < (c + d)$, and c, d, e and f satisfy the inequality $0.5 < \{(c + d + e + f)/b\} \times 100 < 5$.

The aluminum titanate-based ceramic is useful as a catalyst support since it can minimize deterioration of the catalyst supported on the ceramic, even when the catalyst has been exposed to high temperature.

The aluminum titanate-based ceramic preferably exhibits no peak for a crystalline silica-containing phase in its X-ray powder diffraction spectrum. If the aluminum titanate-based ceramic does not include a crystalline silica-containing phase, then it will be more resistant to decomposition at high temperatures and will tend to be more stable.

The invention still further provides a method for producing an aluminum titanate-based ceramic, including a step of sintering a raw mixture containing an aluminum source, a magnesium source, a titanium source and a silicon source, the total amount of $Na_2O$ and $K_2O$ in the aluminum source being between 0.001 mass% and 0.25 mass% inclusive, the total amount of $Na_2O$ and $K_2O$ in the magnesium source being between 0.001 mass% and 0.25 mass% inclusive, the total amount of $Na_2O$ and $K_2O$ in the titanium source being between 0.001 mass% and 0.25 mass% inclusive and the total amount of $Na_2O$ and $K_2O$ in the silicon source being between 0.001 mass% and 0.25 mass% inclusive, to obtain an aluminum titanate-based ceramic wherein, when the elemental composition ratio of Al, Mg, Ti, Si, Na, K, Ca and Sr is represented by the following compositional formula (I):

$$Al_{2(1-x)}Mg_xTi_{(1+y)}O_5 + aAl_2O_3 + bSiO_2 + cNa_2O + dK_2O + eCaO + fSrO \qquad (I),$$

x satisfies the inequality $0 < x < 1$, y satisfies the inequality $0.5x < y < 3x$, a satisfies the inequality $0.1x \leq a < 2x$, b satisfies the inequality $0.05 \leq b \leq 0.4$, c and d satisfy the inequality $0 < (c + d)$ and c, d, e and f satisfy the inequality $0.5 < \{(c + d + e + f)/b\} \times 100 < 5$.

According to this production method it is possible to efficiently produce an aluminum titanate-based ceramic having the construction described above.

In the method for producing an aluminum titanate-based ceramic, the silicon source preferably includes $SiO_2$ at 95 mass% or greater. This will reduce the effect of impurities and facilitate control of the composition of the aluminum titanate-based ceramic.

In the method for producing an aluminum titanate-based ceramic, the silicon source preferably includes an amorphous phase as 90 mass% or greater. This will improve the reactivity of the silicon source during production of the aluminum titanate-based ceramic, and will facilitate production of an aluminum titanate-based ceramic with a uniform silicon-containing phase.

The method for producing an aluminum titanate-based ceramic preferably includes a step of washing the sintered body after sintering of the raw mixture. This will allow the silicon-containing phase on the surface of the aluminum titanate-based ceramic to be removed. In addition, it will allow deterioration of the catalyst to be further minimized when the catalyst has been loaded onto the aluminum titanate-based ceramic.

In the method for producing an aluminum titanate-based ceramic, washing of the sintered body is preferably carried out with an alkali solution at a pH of 9 or higher. This will facilitate removal of the silicon-containing phase on the surface of the aluminum titanate-based ceramic.

**Advantageous Effects of Invention**

According to the invention it is possible to provide a honeycomb filter that can minimize deterioration of the catalyst when exposed to high temperatures, and a method for its production, as well as an aluminum titanate-based ceramic and a method for its production.

**Brief Description of Drawings**

Fig. 1 is a schematic view of a honeycomb filter according to a first embodiment of the invention.
Fig. 2(a) is a magnified view of the end face of the honeycomb filter shown in Fig. 1 on the side opposite Fig. 1(b), and Fig. 2(b) is a magnified view of a cross-section of the partition wall.
Fig. 3 is a diagram along the arrows III-III of Fig. 1(a).
Fig. 4 is a schematic view of a honeycomb filter according to a second embodiment of the invention.
Fig. 5(a) is a magnified view of the end face of the honeycomb filter shown in Fig. 4 on the side opposite Fig. 4(b), and Fig. 5(b) is a magnified view of a cross-section of the partition wall.
Fig. 6 is a diagram along the arrows VI-VI of Fig. 4(a).
Fig. 7 is a schematic diagram showing an exhaust gas purification system comprising a honeycomb filter of the invention.

**Description of Embodiments**

Preferred embodiments of the invention will now be explained in detail, with reference to the accompanying drawings as necessary. Identical or corresponding parts in the drawings will be referred to by like reference numerals and will be explained only once. Also, the dimensional proportions depicted in the drawings are not necessarily limitative.

<Honeycomb filter>

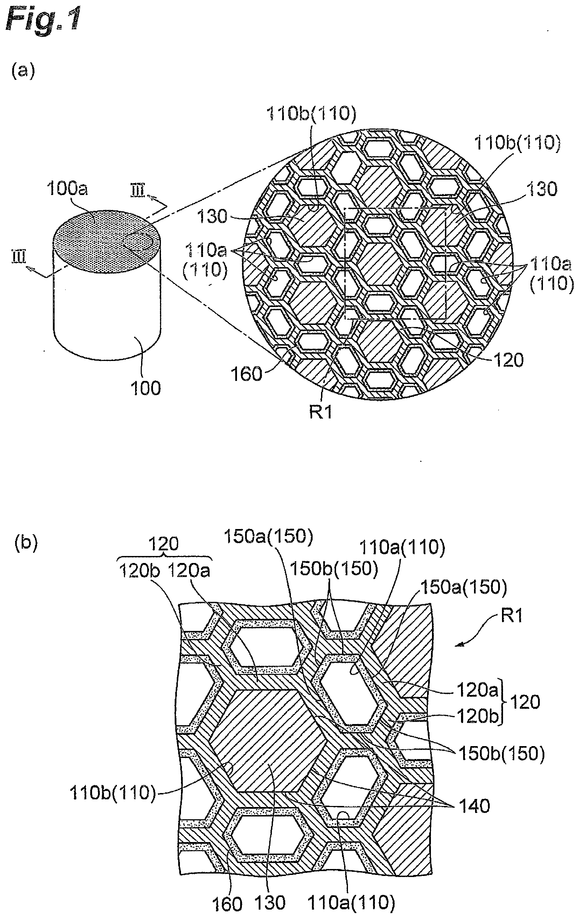

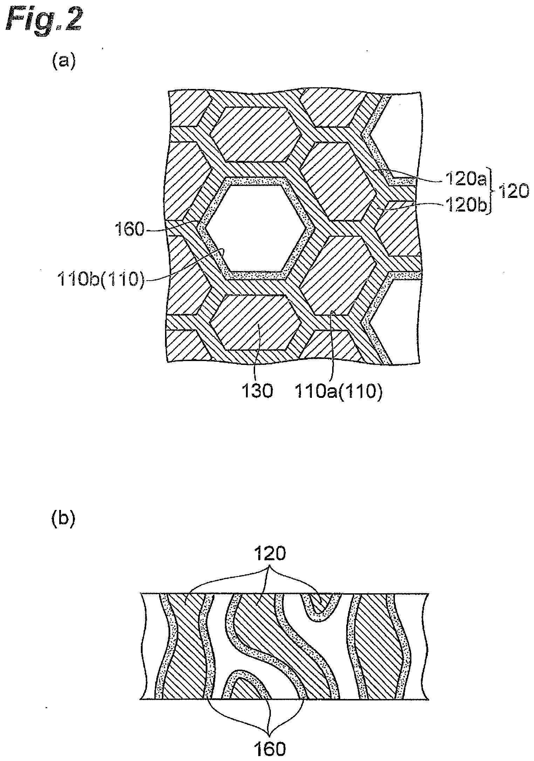

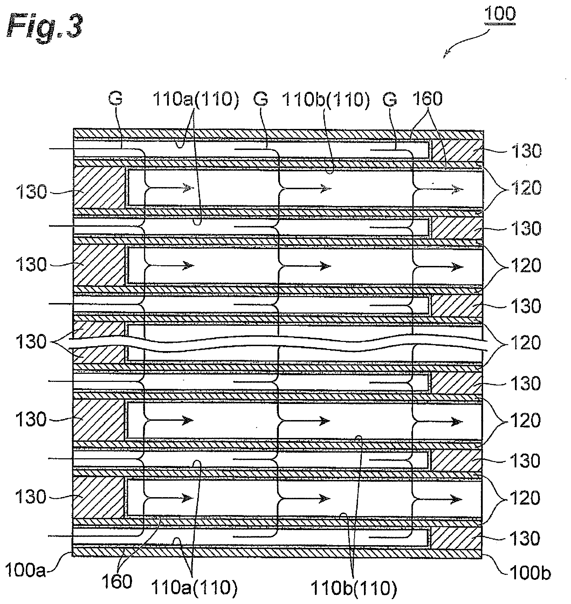

Fig. 1 is a set of schematic views of a honeycomb filter according to a first embodiment, wherein Fig. 1(a) is a perspective view and an end face magnified view of the honeycomb filter, and Fig. 1(b) is a magnified view of region R1 of Fig. 1(a). Fig. 2(a) is a magnified view of the end face of the honeycomb filter shown in Fig. 1 on the side opposite Fig. 1(b), and Fig. 2(b) is a magnified view of a cross-section of the partition wall. Fig. 3 is a diagram along the arrows III-III of Fig. 1(a). The honeycomb filter 100 has one end face (a first end face) 100a, and another end face (second end face) 100b situated on the side opposite the end face 100a.

The honeycomb filter 100 is a circular column with a plurality of flow channels 110 running parallel to each other. The plurality of flow channels 110 are partitioned by partition walls 120 extending parallel to the central axis of the honeycomb filter 100. The plurality of flow channels 110 have a plurality of flow channels (first flow channels) 110a and a plurality of flow channels (second flow channels) 110b adjacent to the flow channels 110a. The flow channels 110a and flow channels 110b run perpendicular to the end faces 100a, 100b, and extend from the end face 100a to the end face 100b.

Ends of the flow channels 110a constituting some of the flow channels 110 are open at the end face 100a, while the other ends of the flow channels 110a are closed at the end face 100b by closing parts 130. Ends of the flow channels 110b constituting the rest of the plurality of flow channels 110 are closed at the end face 100a by closing parts 130, while the other ends of the flow channels 110b are open at the end face 100b. In the honeycomb filter 100, for example, the ends of the flow channels 110a on the end face 100a side are open as gas stream inlets, and the ends of the flow channels 110b on the end face 100b are open as gas stream outlets.

The cross-sections of the flow channels 110a and flow channels 110b perpendicular to the axial direction of the flow channels are hexagonal. The cross-sections of the flow channels 110b may have, for example, regular hexagonal shapes with essentially equal lengths of the sides 140 forming the cross-sections, but they may instead have flattened hexagonal shapes. The cross-sections of the flow channels 110a may have, for example, flattened hexagonal shapes, but they may instead have regular hexagonal shapes. The lengths of the mutually opposite sides in the cross-sections of the flow channels 110a are essentially equal to each other. The cross-sections of the flow channels 110a have two (one pair of) long sides 150a with essentially equal lengths, and four (two pairs of) short sides 150b with essentially equal lengths, as the sides 150 forming the cross-sections. The short sides 150b are configured on both sides of the long sides 150a. The long sides 150a are opposite each other and mutually parallel, while the short sides 150b are also opposite each other and mutually parallel.

The partition wall 120 has a partition wall 120a serving as the sections partitioning the flow channels 110a and the flow channels 110b. Specifically, the flow channels 110a and flow channels 110b are mutually adjacent across the partition wall 120a. By having one flow channel 110a situated between adjacent flow channels 110b, the flow channels 110b become configured alternately with the flow channels 110a in the direction in which the flow channels 110b are arranged (the direction essentially perpendicular to the sides 140).

Each of the sides 140 of the flow channels 110b are opposing and parallel to the long sides 150a of one of the flow channels among the plurality of flow channels 110a. That is, each of the wall faces forming the flow channels 110b are opposing and parallel to one of the wall faces forming the flow channels 110a, of the partition wall 120a situated between the flow channels 110a and the flow channels 110b. Furthermore, the flow channels 110 comprise a structural unit that includes one flow channel 110b and six flow channels 110a surrounding the flow channel 110b, and in this structural unit, all of the sides 140 of the flow channel 110b are opposite the respective long sides 150a of the flow channels 110a. In the honeycomb filter 100, the length of at least one of the sides 140 of each flow channel 110b may be essentially equal to the length of the opposing long side 150a, or the lengths of all of the sides 140 may be essentially equal to the lengths of the opposing long sides 150a.

The partition wall 120 has a partition wall 120b serving as the sections partitioning apart the mutually adjacent flow channels 110a. Specifically, the flow channels 110a surrounding the flow channels 110b are mutually adjacent to each other across the partition wall 120b.

Each of the short sides 150b of the flow channels 110a are opposite and parallel to the short sides 150b of the adjacent flow channels 110a. That is, the wall faces forming the flow channels 110a are opposite and parallel to each other in the partition wall 120b situated between the adjacent flow channels 110a. In the honeycomb filter 100, in the areas between the adjacent flow channels 110a, the length of at least one of the short sides 150b of each flow channel 110a may be essentially equal to the length of the opposing short side 150b, or the lengths of each of the short sides 150b may be essentially equal to the lengths of the opposing short sides 150b.

A catalyst is supported on the surfaces of the partition walls 120a, 120b in the flow channels 110a, the surfaces of the partition walls 120a, 120b in the flow channels 110b and in the pore interiors of the partition walls 120a, 120b (the interiors of the communicating pores), and a catalyst layer 160 is formed by the supported catalyst. It is sufficient if the catalyst layer 160 is formed on at least a portion of the surfaces of the partition walls 120a, 120b and/or at least a portion of the pore interiors of the partition walls 120a, 120b. More specifically, the catalyst layer 160 may be formed in at least one location from among the surfaces of the partition walls 120a, 120b in the flow channels 110a, the surfaces of the partition walls 120a, 120b in the flow channels 110b and the pore interiors of the partition walls 120a, 120b. When the honeycomb filter 100 is to be used as a honeycomb filter also having an SCR function, the catalyst layer 160 is preferably formed on pore interiors of the partition walls 120a, 120b, or on the pore interiors and on the surfaces of the partition walls 120a, 120b at the gas stream outlet end. Also, when the honeycomb filter 100 is to be used as a catalyzed diesel particulate filter, the catalyst layer 160 is preferably formed on the surfaces of the partition walls 120a, 120b at the gas inlet end.

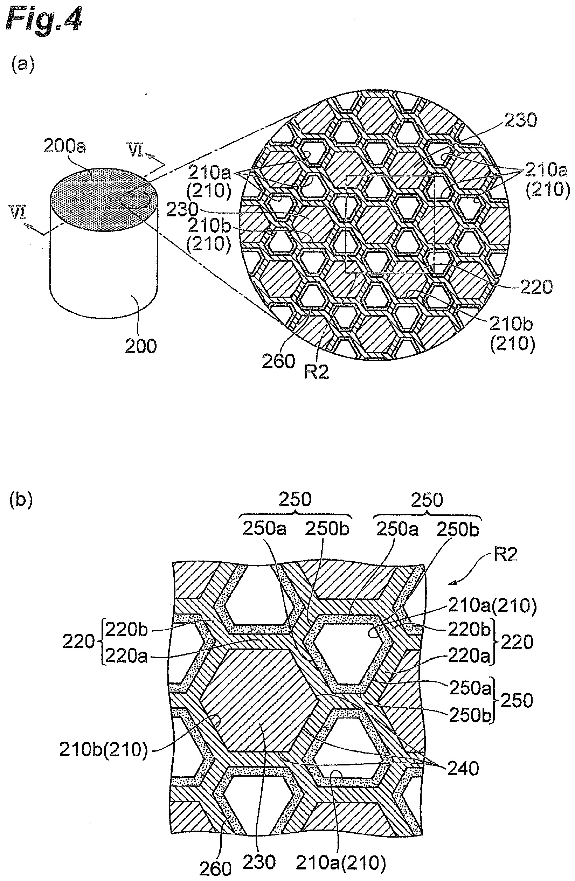

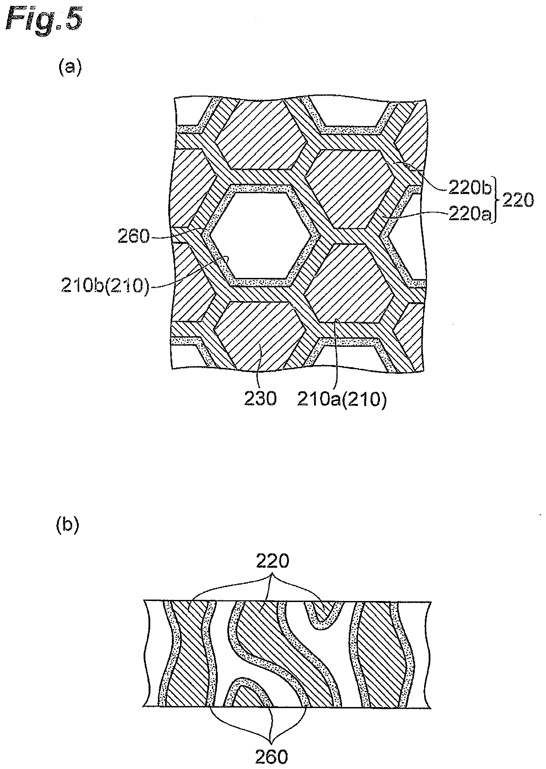

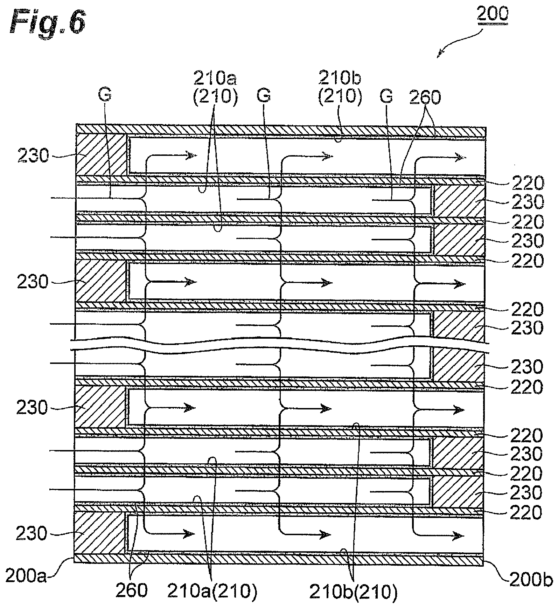

Fig. 4 is a set of schematic views of a honeycomb filter according to a second embodiment, wherein Fig. 4(a) is a perspective view and an end face magnified view of the honeycomb filter, and Fig. 4(b) is a magnified view of region R2 of Fig. 4(a). Fig. 5(a) is a magnified view of the end face of the honeycomb filter shown in Fig. 4 on the side opposite Fig. 4(b), and Fig. 5(b) is a magnified view of a cross-section of the partition wall. Fig. 6 is a diagram along the arrows VI-VI of Fig. 4(a). The honeycomb filter 200 has one end face (a first end face) 200a, and another end face (second end face) 200b situated on the side opposite the end face 200a.

The honeycomb filter 200 is a circular column with a plurality of flow channels 210 running parallel to each other. The plurality of flow channels 210 are partitioned by partition walls 220 extending parallel to the central axis of the honeycomb filter 200. The plurality of flow channels 210 have a plurality of flow channels (first flow channels) 210a and a plurality of flow channels (second flow channels) 210b adjacent to the flow channels 210a. The flow channels 210a and flow channels 210b run perpendicular to the end faces 200a, 200b, and extend from the end face 200a to the end face 200b.

Ends of the flow channels 210a forming some of the flow channels 210 are open at the end face 200a, while the other ends of the flow channels 210a are closed at the end face 200b by closing parts 230. Ends of the flow channels 210b forming the rest of the plurality of flow channels 210 are closed at the end face 200a by closing parts 230, while the other ends of the flow channels 210b are open at the end face 200b. In the honeycomb filter 200, for example, the ends of the flow channels 210a on the end face 200a side are open as gas stream inlets, and the ends of the flow channels 210b on the end face 200b are open as gas stream outlets.

The cross-sections of the flow channels 210a and flow channels 210b perpendicular to the axial direction of the flow channels are hexagonal. The cross-sections of the flow channels 210b may have for example, regular hexagonal shapes with essentially equal lengths of the sides 240 forming the cross-section, but they may instead have flattened hexagonal shapes. The cross-sections of the flow channels 210a may have, for example, flattened hexagonal shapes, but they may instead have regular hexagonal shapes. The lengths of the mutually opposite sides in the cross-sections of the flow channels 210a are different from each other. The cross-sections of the flow channels 210a have three long sides 250a with essentially equal lengths, and three short sides 250b with essentially equal lengths, as the sides 250 forming the cross-sections. The long sides 250a and short sides 250b are mutually opposite and parallel, and the short sides 250b are configured on both sides of each of the long sides 250a.

The partition wall 220 has a partition wall 220a serving as the sections partitioning the flow channels 210a and the flow channels 210b. Specifically, the flow channels 210a and flow channels 210b are mutually adjacent across the partition wall 220a. Between the adjacent flow channels 210b there are configured two flow channels 210a adjacent in the direction essentially perpendicular to the direction of alignment of the flow channels 210b, and the two adjacent flow channels 210a are configured symmetrically sandwiching a line connecting the centers of the cross-sections of the adjacent flow channels 210b.

Each of the sides 240 of the flow channels 210b are opposing and parallel to the long sides 250a of one of the flow channels among the plurality of flow channels 210a. That is, each of the wall faces forming the flow channels 210b are opposing and parallel to one of the wall faces forming the flow channels 210a, of the partition wall 220a situated between the flow channels 210a and the flow channels 210b. Furthermore, the flow channels 210 comprise a structural unit that includes one flow channel 210b and six flow channels 210a surrounding the flow channel 210b, and in this structural unit, all of the sides 240 of the flow channel 210b are opposite the respective long sides 250a of the flow channels 210a. The vertices of each of the cross-sections of the flow channels 210b are opposite the vertices of the adjacent flow channels 210b in the direction of arrangement of the flow channels 210b. In the honeycomb filter 200, the length of at least one of the sides 240 of each flow channel 210b may be essentially equal to the length of the opposing long side 250a, or the lengths of each of the sides 240 may be essentially equal to the lengths of the opposing long sides 250a.

The partition wall 220 has a partition wall 220b serving as the sections partitioning apart the mutually adjacent flow channels 210a. Specifically, the flow channels 210a surrounding the flow channels 210b are mutually adjacent to each other across the partition wall 220b.

Each of the short sides 250b of the flow channels 210a are opposite and parallel to the short sides 250b of the adjacent flow channels 210a. That is, the wall faces forming the flow channels 210a are opposite and parallel to each other in the partition wall 220b situated between the adjacent flow channels 210a. Also, each one of the flow channels 210a is surrounded by three flow channels 210b. In the honeycomb filter 200, in the areas between the adjacent flow channels 210a, the length of at least one of the short sides 250b of each flow channel 210a may be essentially equal to the length of the opposing short side 250b, or the lengths of each of the short sides 250b may be essentially equal to the lengths of the opposing short sides 250b.

A catalyst is supported on the surfaces of the partition walls 220a, 220b in the flow channels 210a, the surfaces of the partition walls 220a, 220b in the flow channels 210b and in the pore interiors of the partition walls 220a, 220b (the interiors of the communicating pores), and a catalyst layer 260 is formed by the supported catalyst. It is sufficient if the catalyst layer 260 is formed on at least a portion of the surfaces of the partition walls 220a, 220b and/or at least a portion of the pore interiors of the partition walls 220a, 220b. More specifically, the catalyst layer 260 may be formed in at least one location from among the surfaces of the partition walls 220a, 220b in the flow channels 210a, the surfaces of the partition walls 220a, 220b in the flow channels 210b and the pore interiors of the partition walls 220a, 220b. When the honeycomb filter 200 is to be used as a honeycomb filter also having an SCR function, the catalyst layer 260 is preferably formed on pore interiors of the partition walls 220a, 220b, or on the pore interiors and on the surfaces of the partition walls 220a, 220b at the gas stream outlet end. Also, when the honeycomb filter 200 is to be used as a catalyzed diesel particulate filter, the catalyst layer 260 is preferably formed on the surfaces of the partition walls 220a, 220b at the gas inlet end.

The lengths of the honeycomb filters 100, 200 in the axial direction of the flow channels may be 50 to 300 mm, for example. The outer diameters of the honeycomb filters 100, 200 may be 50 to 250 mm, for example. The lengths of the sides 140 in the honeycomb filter 100 may be 0.4 to 2.0 mm, for example. The lengths of the long sides 150a may be 0.4 to 2.0 mm, for example, and the lengths of the short sides 150b may be 0.3 to 2.0 mm, for example. The lengths of the sides 240 in the honeycomb filter 200 may be 0.4 to 2.0 mm, for example. The lengths of the long sides 250a may be 0.4 to 2.0 mm, for example, and the lengths of the short sides 250b may be 0.3 to 2.0 mm, for example. The thicknesses of the partition walls 120, 220 (cell wall thicknesses) may be 0.1 to 0.8 mm, for example. The cell density of each of the honeycomb filters 100, 200 (for example, the total density of the flow channels 110a and flow channels 110b at the end face 100a of the honeycomb filter 100), is preferably 50 to 600 cpsi (cells per square inch) and more preferably 100 to 500 cpsi.

For use as a honeycomb filter also having an SCR function, the loading weight of the catalyst layer 160, 260 per unit volume of the honeycomb filter 100, 200 is preferably 20 to 300 mg/cm$^3$ and more preferably 50 to 200 mg/cm$^3$, from the viewpoint of obtaining adequate NOx decomposing power without impairing the function as a diesel particulate filter. For use as a catalyzed diesel particulate filter, this is preferably 5 to 100 mg/cm$^3$ and more preferably 10 to 60 mg/cm$^3$.

In the honeycomb filter 100, the total open area of the plurality of flow channels 110a at the end face 100a is preferably greater than the total open area of the flow channels 110b at the end face 100b. In the honeycomb filter 200, the total open area of the plurality of flow channels 210a at the end face 200a is preferably greater than the total open area of the flow channels 210b at the end face 200b.

The hydraulic diameter of the flow channels 110a, 210a at the end faces 100a, 200a is preferably no greater than 1.4 mm from the viewpoint of maintaining the mechanical strength of the honeycomb filter. The hydraulic diameter of the flow channels 110a, 210a is preferably 0.5 mm or greater and more preferably 0.7 mm or greater from the viewpoint of further minimizing accumulation of a material to be collected in the region on the end face sides inside the flow channels.

The hydraulic diameter of the flow channels 110b, 210b at the end faces 100b, 200b is preferably greater than the hydraulic diameter of the flow channels 110a, 210a at the end faces 100a, 200a. The hydraulic diameter of the flow channels 110b, 210b at the end faces 100b, 200b is preferably no greater than 1.7 mm and more preferably no greater than 1.6 mm from the viewpoint of maintaining the mechanical strength of the honeycomb filter. The hydraulic diameter of the flow channels 110b, 210b is preferably 0.5 mm or greater and more preferably 0.7 mm or greater, from the viewpoint of reducing pressure loss of the exhaust gas aeration.

The shape of the honeycomb filter may be in the form of the honeycomb filters 100, 200 described above, wherein the cross-sections of the first flow channels perpendicular to the axial direction of the first flow channels (flow channels 110a, 210a) have first sides (long sides 150a, 250a) and second sides (short sides 150b, 250b) respectively arranged on both sides of the first sides, each of the sides (sides 140, 240) forming the cross-sections of the second flow channels perpendicular to the axial direction of the second flow channels (flow channels 110b, 210b) being opposite the first sides of the first flow channels, and each of the second sides of the first flow channels being opposite the second sides of the adjacent first flow channels, without any restriction to the aforementioned shapes.

Also, the cross-section of the flow channels perpendicular to the axial direction of the flow channels in the honeycomb filter are not limited to being hexagonal, and may be triangular, quadrilateral, octagonal, circular, ellipsoid or the like. In addition, the flow channels may include mixtures of different diameters, or mixtures of different cross-sectional shapes. Furthermore, the arrangement of the flow channels is not particularly restricted, and the arrangement on the central axes of the flow channels may be a regular triangular pattern arranged on the vertices of regular triangular shapes or a zigzag pattern arranged on the vertices of quadrilateral shapes, depending on the cross-sectional shapes of the flow channels. Also, the honeycomb filter is not limited to being a circular column and may instead be an elliptic cylinder, triangular column, square column, hexagonal column, octagonal column or the like.

The partition wall in the honeycomb filters 100, 200 is porous and may include a sintered porous ceramic, for example. The partition wall has a structure allowing penetration of fluids. Specifically, a plurality of communicating pores that allow passage of fluids (circulating channels) are formed in the partition wall.

The porosity of the partition wall is preferably 20 vol% or greater and more preferably 30 vol% or greater from the viewpoint of increasing the collection efficiency of the honeycomb filter and achieving lower pressure loss. The porosity of the partition wall is preferably no greater than 70 vol% and more preferably no greater than 60 vol%. The mean pore diameter of the partition wall is preferably 5 $\mu$m or greater and more preferably 10 $\mu$m or greater from the viewpoint of increasing the collection efficiency of the honeycomb filter and achieving lower pressure loss. The mean pore diameter of the partition wall is preferably no greater than 35 $\mu$m and more preferably no greater than 30 $\mu$m. The porosity and mean pore diameter of the partition wall can be adjusted by the particle diameter of the raw material, the amount of pore-forming agent added, the type of pore-forming agent and the sintering conditions, and they can be measured by mercury porosimetry.

The partition wall includes aluminum magnesium titanate, alumina, Si element, and either or both the elements Na and K, and when the elemental composition ratio of Al, Mg, Ti, Si, Na, K, Ca and Sr in the partition wall is represented by the following compositional formula (I):

$$Al_{2(1-x)}Mg_xTi_{(1+y)}O_5 + aAl_2O_3 + bSiO_2 + cNa_2O + dK_2O + eCaO + fSrO \qquad (I),$$

x satisfies the inequality $0 < x < 1$, y satisfies the inequality $0.5x < y < 3x$, a satisfies the inequality $0.1x \leq a < 2x$, b satisfies the inequality $0.05 \leq b \leq 0.4$, c and d satisfy the inequality $0 < (c + d)$, and c, d, e and f satisfy the inequality $0.5 < \{(c + d + e + f)/b\} \times 100 < 5$.

If the partition wall includes either or both the elements Na and K, the silicon-containing phase will be stable and as a result, the honeycomb filter will be resistant to decomposition in high temperatures and will tend to be stable. The Al, Mg, Ti, Si, Na, K, Ca and Sr in the partition wall do not necessarily need to be in the form of the compounds shown in compositional formula (I). For example, Na, K, Ca and Sr may be, instead of simple oxides, present as part of the silicon-containing phase, for example. Also, the Mg and Al may be present not only as aluminum magnesium titanate and alumina, but may also be present as part of the silicon-containing phase, for example.

The value of x satisfies the inequality $0 < x < 1$, preferably it satisfies the inequality $0.03 \leq x \leq 0.5$ and more preferably it satisfies the inequality $0.05 \leq x \leq 0.2$. The value of y satisfies the inequality $0.5x < y < 3x$, more preferably it satisfies the inequality $0.5x < y < 2x$ and more preferably it satisfies the inequality $0.7x < y < 2x$.

The value of a satisfies the inequality $0.1x \leq a < 2x$. If a is 0.1x or greater, an effect of increased mechanical strength of the honeycomb filter will be obtained, and if it is less than 2x then it will be possible to lower the thermal expansion coefficient of the honeycomb filter. From the viewpoint of more adequately obtaining the aforementioned effect, the value of a preferably satisfies the inequality $0.5x \leq a \leq 2x$ and more preferably satisfies the inequality $0.5x \leq a \leq 1.5x$.

The value of b satisfies the inequality $0.05 \leq b \leq 0.4$. If b is 0.05 or greater it will be possible to obtain a honeycomb filter with excellent mechanical strength, and if it is 0.4 or less then it will be possible to lower the thermal expansion coefficient of the honeycomb filter. From the viewpoint of more adequately obtaining the aforementioned effect, b preferably satisfies the inequality $0.05 \leq b \leq 0.2$, more preferably it satisfies the inequality $0.05 \leq b \leq 0.15$ and most preferably it satisfies the inequality $0.05 \leq b \leq 0.1$.

The values of c, d, e and f satisfy the inequality $0.5 < \{(c + d + e + f)/b\} \times 100 < 5$ . If the value of $\{(c + d + e + f)/b\} \times 100$ is greater than 0.5, then an effect of increased stability of the honeycomb filter at high temperature will be obtained, and if it is less than 10 then an effect of reduced deterioration of the catalyst will be obtained. From the viewpoint of more adequately obtaining this effect, c, d, e and f satisfy the inequality $1 < \{(c + d + e + f)/b\} \times 100 < 5$.

The partition wall may also include elements other than Al, Mg, Ti, Si, Na, K, Ca, Sr and O, in ranges that do not inhibit the effect of the invention. Examples of other elements that may be included are Li, B, F, P, Ca, Cr, Mn, Fe, Co, Ni, Cu, Zn, Ga, Y, Zr, Nb, Sn, La, Ta, Be, Pb, Bi and the like. The impurities are preferably no greater than 3 mass%, as the total amount in terms of oxides (with F and P in terms of pure substances).

The partition wall preferably includes a glass phase. The term "glass phase" refers to an amorphous phase with $SiO_2$ (silicon dioxide) as the major component. In particular, the partition wall preferably exhibits no peak for crystalline $SiO_2$ (a crystalline silica-containing phase) in the X-ray powder diffraction spectrum, or in other words, all of the $SiO_2$ is preferably present in the partition wall as a glass phase. From the viewpoint of increasing the stability at high temperature, the content of the glass phase in the partition wall is preferably 1 mass% or greater, and from the viewpoint of lowering the thermal expansion coefficient of the honeycomb filter, it is preferably less than 5 mass%. The partition wall may also include a crystal phase other than the aluminum magnesium titanate crystal phase, alumina phase and glass phase. Such a crystal phase may be a phase derived from raw materials used to fabricate a ceramic sintered body. The phase derived from the raw materials may be, for example, a phase derived from titanium source powder, magnesium source powder or the like that remains without formation of an aluminum magnesium titanate crystal phase during production of the honeycomb filter, and phases of titania, magnesia and the like may be mentioned. The crystal phase forming the partition wall can be confirmed by the X-ray diffraction spectrum.

Structural materials for the catalyst layer include porous zeolite, phosphate-based porous materials, precious metal-supporting alumina, titanium-containing oxides, zirconium-containing oxides, cerium-containing oxides and zirconium- and cerium-containing oxides. Any of these may be used alone or in combinations of two or more. For use as an SCR catalyst, there may be further supported in addition to zeolite, also at least one type of metal element selected from the group consisting of titanium, vanadium, chromium, manganese, iron, cobalt, nickel, copper, niobium, rhodium, palladium, silver and platinum. The zeolite has increased $NO_x$ reducing power by metal ion-exchanged zeolite wherein the ions have been exchanged with the aforementioned metal elements. The metal ion-exchanged zeolite has the cations, such as sodium ions, in zeolite replaced by other metal ions. The metal elements are preferably at least one type selected from the group consisting of copper, iron, vanadium, cobalt, nickel and silver, and especially copper, since this will result in a greater effect of increasing the $NO_x$ reducing power. The structures of zeolite and zeolite analogs may be exemplified as MFI, BEA, MOR, FER, CHA, ERI, AEI, LTA, FAU and MWW types, as established by the International Zeolite Association. Among these, those including MFI, CHA and AEI types are preferred for use as SCR, MFI including ZSM-5, AEI including SSZ-39, AlPO-18 and SAPO-18 and CHA including SSZ-13, AlPO-34 and SAPO-34. Also, when the use is for hydrocarbon adsorption, MFI, BEA, MOR, FER and FAU types are preferred from the viewpoint of HC adsorption, typical examples thereof including ZSM-5, β-zeolite, mordenite, ferrierite and USY zeolite.

When the catalyst layer includes zeolite, the molar ratio of silica ($SiO_2$) and alumina ($Al_2O_3$) (silica/alumina) in the zeolite is preferably 5 to 10,000 and more preferably 10 to 5,000 from the viewpoint of obtaining excellent $NO_x$ reducing power.

The honeycomb filters 100, 200 are suitable, for example, as exhaust gas purification filters that collect a material to be collected such as soot in exhaust gas emitted from internal combustion engines such as diesel engines and gasoline engines, and that purify $NO_x$ in exhaust gas. For example, in a honeycomb filter 100, as shown in Fig. 3, gas G supplied from the end face 100a to the flow channels 110a passes through the communicating pores in the catalyst layer 160 and partition wall 120 and reaches the flow channels 110b, and then is discharged from the end face 100b. At this time, the $NO_x$ in the gas G is reduced by the catalyst layer 160 and decomposes into $N_2$ and $H_2O$, while the material to be collected is collected on the surface of the partition wall 120 and in the communicating pores and removed from the gas G, such that the honeycomb filter 100 functions as an exhaust gas purification filter. The honeycomb filter 200 similarly functions as an exhaust gas purification filter.

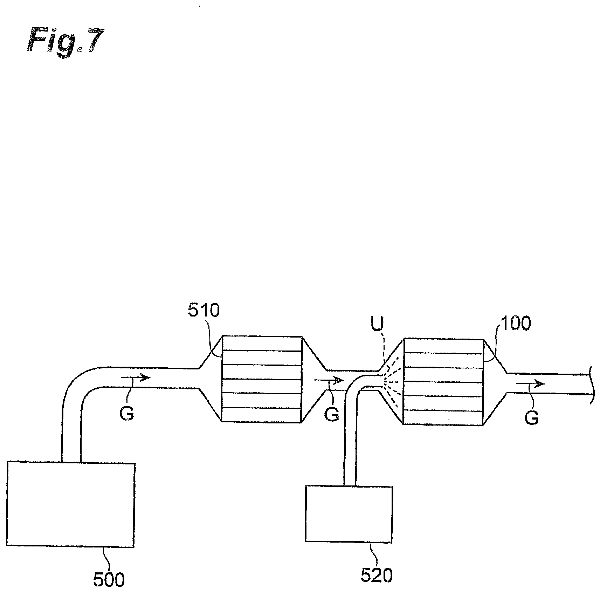

Fig. 7 is a schematic diagram showing an embodiment of an exhaust gas purification system. The exhaust gas purification system of this embodiment comprises the honeycomb filter 100 described above. The exhaust gas purification system may comprise the honeycomb filter 200 instead of the honeycomb filter 100.

In the exhaust gas purification system shown in Fig. 7, gas G emitted from an internal combustion engine 500 such as a diesel engine or gasoline engine is first supplied to an oxidation catalyst (DOC: Diesel Oxidation Catalyst) 510. A precious metal catalyst such as platinum or palladium, for example, may be used as the oxidation catalyst 510. These precious metal catalysts may be used in a form supported on a honeycomb structure, for example. Most of the hydrocarbons, carbon monoxide and the like in the gas G are oxidized and removed by the oxidation catalyst 510.

Next, the gas G is supplied to the honeycomb filter 100 where removal of a material to be collected such as soot and purification of $NO_x$ is accomplished. The ammonia as the reducing agent for $NO_x$ purification is produced by spraying urea water U into the gas G from a urea water supply apparatus 520. This causes the $NO_x$ in the gas G to decompose into $N_2$ and $H_2O$, as indicated by chemical equations (1) to (4).

The exhaust gas purification system may also comprise an oxidation catalyst (DOC) at a downstream point in the honeycomb filter 100. An oxidation catalyst provided at a downstream point in the honeycomb filter 100 is effective for removal of residual ammonia.

The exhaust gas purification system shown in Fig. 7 is an embodiment in which the honeycomb filter has a urea SCR function and a diesel particulate filter function, but the honeycomb filter of the invention is not limited to this embodiment. For example, the honeycomb filter of the invention may be a catalyzed diesel particulate filter without an SCR function, but provided with a function of adsorbing and combusting hydrocarbons that have not been thoroughly oxidized and removed by the oxidation catalyst, as well as a diesel particulate filter function. It may alternatively be a catalyzed diesel particulate filter supporting a precious metal catalyst, in order to promote combustion of collected carbon particles and the like.

<Method for producing honeycomb filter>

An embodiment of a method for producing a honeycomb filter will now be explained. The method for producing a honeycomb filter comprises, for example, a raw material preparation step in which a raw mixture including an inorganic compound powder and additives is prepared, a molding step in which the raw mixture is molded to obtain a molded body with flow channels and a sintering step in which the molded body is sintered, and further comprises a closing step in which one end of each of the flow channels is closed, either between the molding step and the sintering step or after the sintering step, and a step of forming a catalyst layer, after the sintering step and the closing step. Also, the method for producing a honeycomb filter preferably includes a step of washing the honeycomb sintered body, after the sintering step and before the step of forming the catalyst layer. Each of these steps will now be explained.

[Raw material preparation step]

In the raw material preparation step, the inorganic compound powder and additives are kneaded after being mixed, to prepare a raw mixture. The inorganic compound powder includes, for example, an aluminum source powder, a titanium source powder, a magnesium source powder and a silicon source powder. The aluminum source powder may be, for example, α-alumina powder. The titanium source powder may be, for example, anatase titania powder or rutile titania powder. The magnesium source powder may be, for example, magnesia powder or magnesia spinel powder. The silicon source powder may be, for example, silicon oxide powder or glass frit. A calcium source powder may be, for example, calcia powder, calcium carbonate powder or anorthite. A strontium source powder may be, for example, strontium oxide powder or strontium carbonate powder. A yttrium source powder may be, for example, yttrium oxide powder. A barium source powder may be, for example, barium oxide powder, barium carbonate powder or feldspar. A bismuth source powder may be, for example, bismuth oxide powder. Each of the raw powders may be of one type or two or more types. Each raw powder may also contain unavoidably present trace components from the raw materials or from the production process.

The total amount of $Na_2O$ and $K_2O$ in the aluminum source powder must be between 0.001 mass% and 0.25 mass%, inclusive, based on the total mass of the aluminum source powder, the total amount of $Na_2O$ and $K_2O$ in the magnesium source powder must be between 0.001 mass% and 0.25 mass%, inclusive, based on the total mass of the magnesium source powder, the total amount of $Na_2O$ and $K_2O$ in the titanium source powder must be between 0.001 mass% and 0.25 mass%, inclusive, based on the total mass of the titanium source powder, and the total amount of

$Na_2O$ and $K_2O$ in the silicon source powder must be between 0.001 mass% and 0.25 mass%, inclusive, based on the total mass of the silicon source powder. Also, the upper limit for the total amount of $Na_2O$ and $K_2O$ in each raw powder is preferably 0.20 mass% and more preferably 0.15 mass% each. The lower limit for the total amount of $Na_2O$ and $K_2O$ in each raw powder is preferably 0.01 mass% each.

The silicon source powder preferably includes $SiO_2$ at 95 mass% or greater, and more preferably it includes $SiO_2$ at 97 mass% or greater. By using a silicon source powder satisfying this condition, the effects of impurities will be reduced and control of the partition wall composition will be facilitated. Also, the silicon source powder preferably includes an amorphous phase at 90 mass% or greater, and more preferably it includes an amorphous phase at 95 mass% or greater. Using a silicon source powder satisfying this condition will improve the reactivity of the silicon source during production of the honeycomb filter, and facilitate production of a honeycomb filter having a uniform silicon-containing phase.

For the raw powders, the particle diameters each corresponding to 50% cumulative volume as measured by laser diffraction (center particle diameter, D50) are preferably in the following ranges. The D50 value for the aluminum source powder may be 20 to 60 $\mu$m, for example. The D50 value for the titanium source powder may be 0.1 to 25 $\mu$m, for example. The D50 value for the magnesium source powder may be 0.5 to 30 $\mu$m, for example. The D50 value for the silicon source powder may be 0.5 to 30 $\mu$m, for example.

The raw mixture may also contain aluminum titanate and/or aluminum magnesium titanate. For example, when aluminum magnesium titanate is used as a constituent component of the raw mixture, the aluminum magnesium titanate corresponds to a raw mixture comprising an aluminum source, a titanium source and a magnesium source.

Examples of additives include pore-forming agents, binders, lubricants, plasticizers, dispersing agents and solvents.

As pore-forming agents there may be used substances formed of materials that disappear under the temperatures of degreasing or sintering of the molded body during the sintering step. If the molded body containing the pore-forming agent is heated during degreasing or sintering, the pore-forming agent will disappear due to combustion and the like. This creates spaces at the locations where the pore-forming agent was present, while the inorganic compound powder situated between the spaces also shrinks during the sintering, thereby allowing communicating pores to be formed in the partition wall, through which fluid can flow.

The pore-forming agent may be, for example, corn starch, barley starch, wheat starch, tapioca starch, soy starch, rice starch, pea starch, sago palm starch, canna starch or potato starch. In the pore-forming agent, the particle diameter corresponding to 50% cumulative volume (D50), as measured by laser diffraction, is 10 to 70 $\mu$m, for example. When the raw mixture contains a pore-forming agent, the content of the pore-forming agent is, for example, 10 to 50 parts by mass with respect to 100 parts by mass of the inorganic compound powder.

The binder may be, for example, cellulose such as methyl cellulose, hydroxypropyl methyl cellulose, carboxylmethyl cellulose or sodium carboxylmethyl cellulose; an alcohol such as polyvinyl alcohol; a salt such as a lignin sulfonate; or a wax such as a paraffin wax or microcrystalline wax. The content of the binder in the raw mixture is, for example, no greater than 20 parts by mass with respect to 100 parts by mass of the inorganic compound powder.

Examples of lubricants and plasticizers include alcohols such as glycerin; higher fatty acids such as caprylic acid, lauric acid, palmitic acid, alginic acid, oleic acid and stearic acid; stearic acid metal salts such as Al stearate; and polyoxyalkylene alkyl ethers (for example, polyoxyethylene polyoxypropylene butyl ether). The content of the lubricant and plasticizer in the raw mixture is, for example, no greater than 10 parts by mass with respect to 100 parts by mass of the inorganic compound powder.

Examples of dispersing agents include inorganic acids such as nitric acid, hydrochloric acid and sulfuric acid; organic acids such as oxalic acid, citric acid, acetic acid, malic acid and lactic acid; alcohols such as methanol, ethanol and propanol; and ammonium polycarboxylate. The content of the dispersing agent in the raw mixture is, for example, no greater than 20 parts by mass with respect to 100 parts by mass of the inorganic compound powder.

The solvent may be water, for example, with ion-exchanged water being preferred for a low impurity content. When the raw mixture contains a solvent, the content of the solvent is, for example, 10 to 100 parts by mass with respect to 100 parts by mass of the inorganic compound powder.

[Molding step]

In the molding step, a green honeycomb molded body with a honeycomb structure is obtained. In the molding step, there may be applied, for example, an extrusion molding method in which the raw mixture is extruded from a die while kneading, using a single-screw extruder.

[Sintering step]

In the sintering step, the green honeycomb molded body with a honeycomb structure obtained by the molding step is sintered to obtain a honeycomb sintered body. In the sintering step, calcination (degreasing) may be carried out before sintering of the molded body, in order to remove the binder and the like in the molded body (in the raw mixture). For sintering of the molded body, the sintering temperature will usually be 1300°C or higher, and is preferably 1400°C or higher. The sintering temperature will usually be no higher than 1650°C and is preferably no higher than 1550°C. The temperature-elevating rate is not particularly restricted but will usually be 1 to 500°C/hr. The sintering time may be any time sufficient for the inorganic compound powder to transition to aluminum titanate-based crystals, and it will differ depending on the amount of raw material, the type of sintering furnace, the sintering temperature and the sintering atmosphere, but will usually be 10 minutes to 24 hours.

[Closing step]

The closing step is carried out between the molding step and the sintering step, or after the sintering step. When the closing step is carried out between the molding step and the sintering step, one end of each of the flow channels of the unsintered green honeycomb molded body obtained in the molding step is closed with a closing material, after which the closing material is sintered together with the green honeycomb molded body in the sintering step, to obtain a honeycomb structure provided with a closing part closing one end of the flow channels. When the closing step is carried out after the sintering step, one end of each of the flow channels of the honeycomb sintered body obtained in the sintering step is closed with a closing material, after which the closing material is sintered together with the honeycomb sintered body, to obtain a honeycomb structure provided with a closing part closing one end of the flow channels. The closing material used may be the same mixture as the raw mixture used to obtain the green honeycomb molded body.

[Washing step]

The washing step is a step of washing the honeycomb sintered body after the sintering step and before the step of forming the catalyst layer. When the closing step is carried out after the sintering step, the washing step is preferably carried out after the closing step. Washing of the honeycomb sintered body may be accomplished using an alkali solution, acid solution, steam or the like, but washing is preferably done using an alkali solution, and more preferably using an alkali solution with a pH of 9 or higher. Examples of alkali solutions include ammonia water solutions and sodium hydroxide aqueous solutions. Carrying out a washing step can remove Na element and K element present on the surface of the partition wall, and can reduce the abundance of Na element and K element on the surface of the partition wall. This will provide an effect of further reducing deterioration of the catalyst.

[Catalyst layer-forming step]

The catalyst layer-forming step is carried out after the sintering step and the closing step. In the catalyst layer-forming step, first the catalyst is mixed with water to prepare a slurry, and then the prepared slurry is coated onto the honeycomb structure. Silica sol and/or alumina sol may also be added to the slurry, in addition to the catalyst and water. The following is an example of a method for coating the slurry.

The prepared slurry is sucked inside the flow channels opened at the gas stream inlet side of the honeycomb structure (the first flow channels) and inside the flow channels opened at the gas stream outlet side (second flow channels), becoming coated onto the surface of the partition wall. After coating, it is dried at 400 to 600°C for about 0.1 to 5 hours, to remove the moisture. In this manner a catalyst layer including a desired catalyst is fabricated. The catalyst layer is also incorporated into the pore interiors (into the communicating pores) of the partition wall, and is therefore formed not only on the surface of the partition wall inside the flow channels but also on the surface of the pore interiors of the partition wall. In this manner it is possible to obtain a honeycomb filter provided with a catalyst layer on the surface of the partition wall inside the first and second flow channels, and inside the pores of the partition wall.

<Aluminum titanate-based ceramic and method for its production>

The aluminum titanate-based ceramic is the main component forming the partition wall of the honeycomb filter, and it satisfies compositional formula (I). Also, the aluminum titanate-based ceramic can be produced by the same method as the method described as the method for producing the honeycomb filter. The aluminum titanate-based ceramic can be used as a material other than for the partition wall of the honeycomb filter, in a form depending on the purpose of use.

Examples

The present invention will now be explained in greater detail through the following examples, with the understanding that these examples are in no way limitative on the invention.

(Example 1)

A raw mixture was prepared by mixing raw powders of aluminum magnesium titanate ($Al_2O_3$ powder (a), $TiO_2$ powder, MgO powder), $SiO_2$ powder (a), a pore-forming agent, an organic binder, a plasticizer, a lubricant and water (solvent). The content of each component in the raw mixture was prepared with the following values. Also, the $Na_2O$ contents and $K_2O$ contents of the $Al_2O_3$ powder (a), $TiO_2$ powder, MgO powder and $SiO_2$ powder (a) are shown in Table 1 below.

[Raw mixture components]

$Al_2O_3$ powder (a) (trade name: NO105RS by Nabaltec): 38.7 parts by mass
$TiO_2$ powder (trade name: SR-240 by Chronos): 36.2 parts by mass
MgO powder (trade name: UC95S by Ube Industries, Ltd.): 2.0 parts by mass
$SiO_2$ powder (a) (trade name: SILYSIA 350 by Fuji Silysia Chemical, Ltd.): 3.0 parts by mass
Pore-forming agent (starch with a mean particle diameter of 25 $\mu$m, obtained from potato): 20.0 parts by mass
Organic binder (a) (hydroxypropyl methyl cellulose, trade name: 65SH-30000 by Shin-Etsu Chemical Co., Ltd.): 6.3 parts by mass
Plasticizer (polyoxyethylene polyoxypropylene monobutyl ether): 4.5 parts by mass
Lubricant (glycerin): 0.4 part by mass
Water: 31 parts by mass

[Table 1]

|  | $Na_2O$ content (mass%) | $K_2O$ content (mass%) |
|---|---|---|
| $Al_2O_3$ powder (a) | 0.05 | 0 |
| $TiO_2$ powder | 0.011 | 0.01 |
| MgO powder | 0.12 | 0.002 |
| $SiO_2$ powder (a) | 0.03 | 0.004 |
| Organic binder (a) | 0.094 | 0 |

After kneading the raw mixture, it was subjected to extrusion molding to obtain a cylindrical honeycomb molded body having a plurality of through-holes (cross-sectional shape: square) in the lengthwise direction. The obtained honeycomb molded body was sintered in air with a box-type electric furnace, the temperature was raised to 1500°C at a temperature-elevating rate of 80°C/hr, and the same temperature was maintained for 5 hours, to fabricate a honeycomb sintered body. The obtained honeycomb sintered body was subjected to elemental analysis by ICP emission spectroscopy, absorption spectrophotometry and flame analysis, and calculation was performed for the values of x, y, a, b, c, d, e and f with the elemental composition ratio represented by compositional formula (I). The results are shown in Table 3.
The obtained honeycomb sintered body was coated with a slurry of Cu-ZSM-5 (copper ion-exchanged zeolite, $SiO_2/Al_2O_3$ ratio = 18, CuO: 3 mass%) as a catalyst, using a dip method, to obtain a catalyst-coated honeycomb sintered body. The Cu-ZSM-5 slurry was prepared by wet blending 30 parts by mass of ZSM-5 zeolite and 70 parts by mass of water, and performing ion-exchange so that the copper ion content was 3 mass% (solid content) in terms of CuO with respect to zeolite. In the catalyst-coated honeycomb sintered body, the loading weight of the catalyst was 7.1 parts by mass with respect to 100 parts by mass of the honeycomb sintered body.

(Comparative Example 1)

A raw mixture was prepared by mixing raw powders of aluminum magnesium titanate ($Al_2O_3$ powder (b), $TiO_2$ powder, MgO powder), $SiO_2$ powder (b), a pore-forming agent, an organic binder, a plasticizer, a lubricant and water (solvent). The content of each component in the raw mixture was prepared with the following values. Also, the $Na_2O$ contents and $K_2O$ contents of the $Al_2O_3$ powder (b), $TiO_2$ powder, MgO powder and $SiO_2$ powder (b) are shown in Table 2 below.

[Raw mixture components]

Al$_2$O$_3$ powder (b) (trade name: A-21 by Sumitomo Chemical Co., Ltd.): 39.5 parts by mass
TiO$_2$ powder (trade name: SR-240 by Chronos): 36.2 parts by mass
MgO powder (trade name: UC95S by Ube Industries, Ltd.): 1.9 parts by mass
SiO$_2$ powder (b) (trade name: CK0160M1 by Nippon Frit Co., Ltd.): 2.3 parts by mass
Pore-forming agent (starch with a mean particle diameter of 25 μm, obtained from potato): 20.0 parts by mass
Organic binder (a) (hydroxypropyl methyl cellulose, trade name: 65SH-30000 by Shin-Etsu Chemical Co., Ltd.): 6.3 parts by mass
Plasticizer (polyoxyethylene polyoxypropylene monobutyl ether): 4.5 parts by mass
Lubricant (glycerin): 0.4 part by mass
Water: 31 parts by mass

[Table 2]

|  | Na$_2$O content (mass%) | K$_2$O content (mass%) |
|---|---|---|
| Al$_2$O$_3$ powder (b) | 0.25 | 0 |
| TiO$_2$ powder | 0.011 | 0.01 |
| MgO powder | 0.12 | 0.002 |
| SiO$_2$ powder (b) | 9.4 | 4.2 |
| Organic binder (a) | 0.094 | 0 |

After kneading the raw mixture, it was subjected to extrusion molding to obtain a cylindrical honeycomb molded body having a plurality of through-holes (cross-sectional shape: square) in the lengthwise direction. The obtained honeycomb molded body was sintered in air with a box-type electric furnace, the temperature was raised to 1500°C at a temperature-elevating rate of 80°C/hr, and the same temperature was maintained for 5 hours, to fabricate a honeycomb sintered body. The obtained honeycomb sintered body was subjected to elemental analysis by ICP emission spectroscopy, absorption spectrophotometry and flame analysis, and calculation was performed for the values of x, y, a, b, c, d, e and f with the elemental composition ratio represented by compositional formula (I). The results are shown in Table 3.

The obtained honeycomb sintered body was coated with the same Cu-ZSM-5 slurry as used in Example 1 as a catalyst, using a dip method, to obtain a catalyst-coated honeycomb sintered body. In the catalyst-coated honeycomb sintered body, the loading weight of the catalyst was 9.2 parts by mass with respect to 100 parts by mass of the honeycomb sintered body.

(Example 2)

A raw mixture was prepared by mixing raw powders of aluminum magnesium titanate (Al$_2$O$_3$ powder (a), TiO$_2$ powder, MgO powder), SiO$_2$ powder (a), a pore-forming agent, an organic binder, a plasticizer, a lubricant and water (solvent). The content of each component in the raw mixture was prepared with the following values. Also, the materials listed in Table 1 were used for the Al$_2$O$_3$ powder (a), TiO$_2$ powder, MgO powder and SiO$_2$ powder (a).

[Raw mixture components]

Al$_2$O$_3$ powder (a) (trade name: NO105RS by Nabaltec): 38.7 parts by mass
TiO$_2$ powder (trade name: SR-240 by Chronos): 36.5 parts by mass
MgO powder (trade name: UC95S by Ube Industries, Ltd.): 1.9 parts by mass
SiO$_2$ powder (a) (trade name: SILYSIA 350 by Fuji Silysia Chemical, Ltd.): 2.8 parts by mass
Pore-forming agent (starch with a mean particle diameter of 25 μm, obtained from potato): 20.0 parts by mass
Organic binder (a) (hydroxypropyl methyl cellulose, trade name: 65SH-30000 by Shin-Etsu Chemical Co., Ltd.): 6.3 parts by mass

Plasticizer (polyoxyethylene polyoxypropylene monobutyl ether): 4.5 parts by mass
Lubricant (glycerin): 0.4 part by mass
Water: 31 parts by mass

After kneading the raw mixture, it was subjected to extrusion molding to obtain a cylindrical honeycomb molded body having a plurality of through-holes (cross-sectional shape: square) in the lengthwise direction. The obtained honeycomb molded body was sintered in air with a box-type electric furnace, the temperature was raised to 1500°C at a temperature-elevating rate of 80°C/hr, and the same temperature was maintained for 5 hours, to fabricate a honeycomb sintered body. The obtained honeycomb sintered body was subjected to elemental analysis by ICP emission spectroscopy, absorption spectrophotometry and flame analysis, and calculation was performed for the values of x, y, a, b, c, d, e and f with the elemental composition ratio represented by compositional formula (I). The results are shown in Table 3.
The obtained honeycomb sintered body was coated with a slurry of β-zeolite as a catalyst, using a dip method, to obtain a catalyst-coated honeycomb sintered body. The β-zeolite slurry was prepared by wet blending 20 parts by mass of β-zeolite and 80 parts by mass of water. In the catalyst-coated honeycomb sintered body, the loading weight of the catalyst was 7.8 parts by mass with respect to 100 parts by mass of the honeycomb sintered body.

(Comparative Example 2)

A honeycomb sintered body was fabricated in the same manner as Comparative Example 1. The obtained honeycomb sintered body was coated with the same β-zeolite slurry as used in Example 2 as a catalyst, using a dip method, to obtain a catalyst-coated honeycomb sintered body. In the catalyst-coated honeycomb sintered body, the loading weight of the catalyst was 5.0 parts by mass with respect to 100 parts by mass of the honeycomb sintered body.

[Table 3]

| | x | y | a | b | c | d | e | f | $\{(c+d+e+f)/b\} \times 100$ |
|---|---|---|---|---|---|---|---|---|---|
| Example 1 | 0.12 | 0.138 | 0.065 | 0.118 | 0.001 | 0.0005 | 0.001 | 0 | 2.1 |
| Comp. Ex. 1 | 0.12 | 0.135 | 0.09 | 0.097 | 0.016 | 0.0043 | 0.001 | 0 | 22.0 |
| Example 2 | 0.12 | 0.089 | 0.033 | 0.122 | 0.001 | 0.0002 | 0.001 | 0 | 1.8 |
| Comp. Ex. 2 | 0.12 | 0.135 | 0.09 | 0.097 | 0.016 | 0.0043 | 0.001 | 0 | 22.0 |

<X-ray powder diffraction spectrum>

When the honeycomb sintered bodies obtained in each of the examples and comparative examples were ground and the X-ray powder diffraction spectrum of each was obtained, all of the honeycomb sintered bodies showed a diffraction peak for an aluminum magnesium titanate crystal phase but no peak for crystalline $SiO_2$ (a crystalline silica-containing phase).

<Catalyst evaluation>

For comparison, a sample of the catalyst alone was prepared as Reference Example 1. Also, each of the catalyst-coated honeycomb sintered bodies obtained in the examples and comparative examples was ground to prepare an evaluation sample. The samples of the examples, comparative examples and reference examples were subjected to heat treatment under the heat treatment conditions shown in Table 4 and Table 5 (at 900°C for 5 hours or at 750°C for 16 hours), in an environment with an $H_2O$ concentration and $O_2$ concentration of both 10 vol% and a $N_2$ concentration of 80 vol%. The samples of Example 1 and Comparative Example 1 were measured for BET specific surface area and the samples of Examples 2, Comparative Example 2 and Reference Example 1 were measured for $NH_3$-TPD, each of the samples being measured before and after heat treatment. The measurement results for the BET specific surface area are shown in Table 4, and the measurement results for $NH_3$-TPD are shown in Table 5. $NH_3$-TPD is a method in which $NH_3$ is adsorbed onto each sample, and then the temperature is increased and the desorbed gas generated thereby is measured. The specific measuring conditions for the $NH_3$-TPD were as follows.

[Pretreatment]

Approximately 0.05 g of sample was placed in a measuring cell, the temperature was increased from room temperature to 500°C (10°C/min) in a He stream (50 ml/min), and the temperature was kept at 500°C for 60 minutes.

The temperature was then lowered to 100°C while in the He stream (50 ml/min).

[NH$_3$ adsorption]

Adsorption of 0.5% NH$_3$/He gas (100 ml/min) at 100°C was carried out for 30 minutes.

[NH$_3$ deaeration]

Evacuation was carried out at 100°C for 30 minutes in a He stream (50 ml/min).

[Measurement of temperature increase desorption]

The temperature was increased from 100°C to 800°C (10°C/min) in a He stream (50 ml/min), and the NH$_3$ desorption was detected by quadrupole MS (m/z = 16).

[Acid content analysis]

The area value (number of counts) of NH$_3$ desorption peaks obtained in each measurement was calculated. The summed NH$_3$ desorption at 200 to 500°C was recorded as the acid content. Quantitative measurement was carried out after each of these measurements, and a known concentration of gas (0.5% NH$_3$/He gas) was circulated through for 30 minutes (50 ml/min). The number of moles of gas per count was calculated from the area value (number of counts) during a fixed time, based on the known gas concentration (0.5% NH$_3$/He gas), circulation time (30 minutes) and flow rate (50 ml/min). This value was used as the factor (mol/count), and the NH$_3$ desorption (μmol/g) per gram was calculated by multiplying it by the number of NH$_3$ desorption peak counts and dividing by the sampling weight.

The NH$_3$-TPD measurement results shown in Table 5 are calculated as relative values with respect to 100% as the NH$_3$ desorption (μmol/g) measured for the sample before heat treatment in Reference Example 1. A higher value indicates a higher acid content on the sample surface, more excellent adsorption performance for hydrocarbons and the like, and more excellent catalyst performance.

[Table 4]

|  | Catalyst type | Heat treatment conditions | BET specific surface area | | |
|---|---|---|---|---|---|
|  |  |  | Before heat treatment (m$^2$/g) | After heat treatment (m$^2$/g) | Change rate (%) |
| Example 1 | Cu-ZSM-5 | 900°C, 5h | 24.3 | 8.94 | 63.2 |
| Comp. Ex. 1 | Cu-ZSM-5 | 900°C, 5h | 18.7 | 0.65 | 96.5 |

[Table 5]

|  | Catalyst type | Heat treatment conditions | NH$_3$-TPD | |
|---|---|---|---|---|
|  |  |  | Before heat treatment (%) | After heat treatment (%) |
| Example 2 | β-Zeolite | 750°C, 16h | 95 | 23 |
| Comp. Ex. 2 | β-Zeolite | 750°C, 16h | 39 | 7 |
| Ref. Ex. 1 | β-Zeolite | 750°C, 16h | 100 | 17 |

As clearly seen by the results in Table 4 and Table 5, it was confirmed that with the catalyst-coated honeycomb sintered bodies of Examples 1 and 2, it is possible to minimize deterioration of the catalyst when exposed to high temperature, compared to the catalyst-coated honeycomb sintered bodies of Comparative Examples 1 and 2. This effect can be likewise exhibited even when the catalyst-coated honeycomb sintered body is closed to produce a honeycomb filter.

(Example 3)

A raw mixture was prepared by mixing raw powders of aluminum magnesium titanate ($Al_2O_3$ powder (a), $TiO_2$ powder, MgO powder), $SiO_2$ powder (c), a pore-forming agent, an organic binder (a), a plasticizer, a lubricant and water (solvent). The contents of each of the components in the raw mixture are shown in Table 6 (units: parts by mass). The details for each of the components in Table 6 are listed below. Also, the $Na_2O$ contents and $K_2O$ contents of the $Al_2O_3$ powder, $TiO_2$ powder, MgO powder, $SiO_2$ powder and organic binder used are shown in Table 7 below.

[Raw mixture components]

$Al_2O_3$ powder (a) (trade name: NO105RS by Nabaltec)
$Al_2O_3$ powder (b) (trade name: A-21 by Sumitomo Chemical Co., Ltd.)
$TiO_2$ powder (trade name: SR-240 by Chronos)
MgO powder (trade name: UC95S by Ube Industries, Ltd.)
$SiO_2$ powder (b) (trade name: CK0160M1 by Nippon Frit Co., Ltd.)
$SiO_2$ powder (c) (trade name: Y-40 by Tatsumori, Ltd.)
Pore-forming agent (starch with a mean particle diameter of 25 $\mu$m, obtained from potato)
Organic binder (a) (hydroxypropyl methyl cellulose, trade name: 65SH-30000 by Shin-Etsu Chemical Co., Ltd.)
Organic binder (b) (hydroxypropyl methyl cellulose, trade name: PMB-30U by Samsung Fine Chemicals Co., Ltd.)
Plasticizer (polyoxyethylene polyoxypropylene monobutyl ether) Lubricant (glycerin)

[Table 6]

| | Example 3 | Example 4 | Example 5 | Example 6 | Comp. Ex. 3 |
|---|---|---|---|---|---|
| $Al_2O_3$ powder (a) | 34.3 | 34.3 | - | 28.3 | - |
| $Al_2O_3$ powder (b) | - | - | 34.3 | 6.0 | 39.5 |
| $TiO_2$ powder | 36.2 | 36.2 | 36.2 | 36.2 | 36.2 |
| MgO powder | 1.8 | 1.8 | 1.8 | 1.8 | 1.9 |
| $SiO_2$ powder (b) | - | - | - | - | 2.3 |
| $SiO_2$ powder (c) | 1.95 | 1.95 | 1.95 | 1.95 | - |
| Pore-forming agent | 20.0 | 20.0 | 20.0 | 20.0 | 20.0 |
| Organic binder (a) | 63 | - | - | - | 6.3 |
| Organic binder (b) | - | 6.3 | 6.3 | 6.3 | - |
| Plasticizer | 4.5 | 4.5 | 4.5 | 4.5 | 4.5 |
| Lubricant | 0.4 | 0.4 | 0.4 | 0.4 | 0.4 |
| Water | 29 | 29 | 29 | 29 | 31 |

[Table 7]

| | $Na_2O$ content (mass%) | $K_2O$ content (mass%) |
|---|---|---|
| $Al_2O_3$ powder (a) | 0.05 | 0 |
| $Al_2O_3$ powder (b) | 0.25 | 0 |
| $TiO_2$ powder | 0.011 | 0.01 |
| MgO powder | 0.12 | 0.002 |
| $SiO_2$ powder (a) | 0.03 | 0.004 |
| $SiO_2$ powder (b) | 9.4 | 4.2 |

(continued)

|  | Na$_2$O content (mass%) | K$_2$O content (mass%) |
|---|---|---|
| SiO$_2$ powder (c) | 0.002 | 0.001 |
| Organic binder (a) | 0.094 | 0 |
| Organic binder (b) | 0.67 | 0 |

After kneading the raw mixture, it was subjected to extrusion molding to obtain a cylindrical honeycomb molded body having a plurality of through-holes (cross-sectional shape: square) in the lengthwise direction. The obtained honeycomb molded body was sintered in air with a box-type electric furnace, the temperature was raised to 1500°C at a temperature-elevating rate of 80°C/hr, and the same temperature was maintained for 5 hours, to fabricate a honeycomb sintered body. The obtained honeycomb sintered body was subjected to elemental analysis by ICP emission spectroscopy, absorption spectrophotometry and flame analysis, and calculation was performed for the values of x, y, a, b, c, d, e and f with the elemental composition ratio represented by compositional formula (I). The results are shown in Table 8.

[Table 8]

|  | x | y | a | b | c | d | e | f | {(c+d+e+f) /b} $\times$ 100 |
|---|---|---|---|---|---|---|---|---|---|
| Example 3 | 0.12 | 0.159 | 0.107 | 0.097 | 0.0022 | 0.0004 | 0.0012 | 0 | 3.9 |
| Example 4 | 0.12 | 0.154 | 0.063 | 0.096 | 0.0035 | 0.0004 | 0.0012 | 0 | 5.3 |
| Example 5 | 0.12 | 0.151 | 0.097 | 0.096 | 0.0053 | 0.0004 | 0.0011 | 0 | 7.1 |
| Example 6 | 0.12 | 0.182 | 0.113 | 0.098 | 0.0031 | 0.0005 | 0.0010 | 0 | 4.7 |
| Comp. Ex. 3 | 0.12 | 0.135 | 0.09 | 0.097 | 0.017 | 0.0043 | 0.0010 | 0 | 22.0 |

Examples 4 and 5 fall outside the scope of the claims.

The obtained honeycomb sintered body was coated with the same Cu-ZSM-5 slurry as used in Example 1 as a catalyst, using a dip method, to obtain a catalyst-coated honeycomb sintered body. In the catalyst-coated honeycomb sintered body, the loading weight of the catalyst with respect to 100 parts by mass of the honeycomb sintered body was as listed in Table 9.

[Table 9]

|  | Catalyst amount per 100 parts by mass of honeycomb sintered body (parts by mass) |
|---|---|
| Example 3 | 6.4 |
| Example 4 | 6.6 |
| Example 5 | 6.1 |
| Example 6 | 5.6 |
| Comp. Example 3 | 7.2 |

Examples 4 and 5 fall outside the scope of the claims.

(Examples 4 to 7 and Comparative Example 3)

For each of the examples and comparative examples, a honeycomb sintered body was fabricated by the same procedure as Example 3, with the raw materials and mixing ratios shown in Table 6. The obtained honeycomb sintered body was subjected to elemental analysis by ICP emission spectroscopy, absorption spectrophotometry and flame analysis, and calculation was performed for the values of x, y, a, b, c, d, e and f with the elemental composition ratio represented by compositional formula (I). The results are shown in Table 8.

The obtained honeycomb sintered body was coated with the same Cu-ZSM-5 slurry as used in Example 1 as a catalyst, using a dip method, to obtain a catalyst-coated honeycomb sintered body. In the catalyst-coated honeycomb sintered body, the loading weight of the catalyst with respect to 100 parts by mass of the honeycomb sintered body was as listed in Table 9.

<Catalyst pretreatment>

The catalyst-coated honeycomb sintered bodies obtained in the examples and comparative examples were ground and sieved out from 500 $\mu$m to 1000 $\mu$m, to prepare evaluation samples. Each of the obtained samples was kept at 550°C for 5 hours in an environment with an $H_2O$ concentration and $O_2$ concentration of both 10 vol%, a $N_2$ concentration of 80 vol% and a gas flow rate of 550 ml/min, for heat treatment.

<Catalyst evaluation>

Each sample was measured for NO removal performance before and after heat treatment. The specific measuring conditions were as follows.

[Measurement of NO removal performance]

The NO gas concentration was measured using an ECL-88AO-Lite by Anatec-Yanaco as the NO meter.

[Reactive gas]

There was prepared a mixed gas (reactive gas) having an $H_2O$ concentration and $O_2$ concentration of both 8 vol%, a NO concentration and $NH_3$ concentration of both 900 ppm by volume and a $N_2$ concentration of 83.8 vol%. The reactive gas was supplied to the NO meter at a gas flow rate of 513 ml/min for measurement of the NO concentration, and the value was recorded as the initial gas NO concentration, representing the NO concentration just before start of the reaction.

[Reaction temperature]

Each measurement was conducted at a reaction temperature of 300°C.

[Analysis of NO removal performance]

The evaluation samples obtained by pretreatment were evaluated for NO removal performance by the following method, before and after heat treatment. First, the evaluation sample was packed into a quartz reaction tube until the amount of Cu-ZSM-5 was 41 mg, and the reactive gas was supplied into the reaction tube at a gas flow rate of 513 ml/min while raising the temperature inside the reaction tube to the reaction temperature at 5°C/min. At 10 minutes, 20 minutes and 30 minutes after reaching the reaction temperature, the NO concentration of the reactive gas that had passed through the evaluation sample was measured with a NO meter, and the average value for 3 points was recorded as the NO gas concentration at reaction time. The NO removal performance was calculated by the following formula.

$$\{1 - (\text{NO gas concentration at reaction time/pre-gas NO concentration})\} \times 100(\%)$$

Table 10 shows the measurement results for the NO removal performance. A higher value indicates more excellent NO removal performance, and superior catalyst performance. Also, the lower reduction in NO removal performance after heat treatment with respect to the NO removal performance before heat treatment means that it is possible to minimize deterioration in the catalyst when the catalyst-coated honeycomb sintered body has been exposed to high temperature. This effect can be likewise exhibited even when the catalyst-coated honeycomb sintered body is closed to produce a honeycomb filter.

[Table 10]

|  | NO removal performance (%) | |
| --- | --- | --- |
|  | Before heat treatment | After heat treatment |
| Example 3 | 88.2 | 87.7 |
| Example 4 | 88.4 | 76.7 |

(continued)

|  | NO removal performance (%) | |
|---|---|---|
|  | Before heat treatment | After heat treatment |
| Example 5 | 88.6 | 77.1 |
| Example 6 | 89.0 | 84.0 |
| Comp. Example 3 | 88.9 | 58.8 |

Examples 4 and 5 fall outside the scope of the claims.

**Industrial Applicability**

As explained above, it is possible according to the invention to provide a honeycomb filter that can minimize deterioration of the catalyst when exposed to high temperatures, and a method for its production, as well as an aluminum titanate-based ceramic and a method for its production.

Explanation of Symbols

100, 200: Honeycomb filters, 100a, 200a: one end faces (first end faces), 100b, 200b: other end faces (second end faces), 110, 210: flow channels, 110a, 210a: flow channels (first flow channels), 110b, 210b: flow channels (second flow channels), 120, 220: partition walls, 160,260: catalyst layers.

**Claims**

1. A honeycomb filter comprising a partition wall forming a plurality of flow channels that are mutually parallel, and a catalyst supported on at least a portion of the surfaces of the partition wall and/or on at least a portion of the pore interiors of the partition wall, wherein the honeycomb filter has a first end face and a second end face situated on the side opposite the first end face,
the plurality of flow channels comprising a plurality of first flow channels having their ends closed on the second end face side and a plurality of second flow channels having their ends closed on the first end face side, and
the elemental composition ratio of Al, Mg, Ti, Si, Na, K, Ca and Sr in the partition wall is represented by formula (I) :

$$Al_{2(1-x)}Mg_xTi_{(1+y)}O_5 + (a\ Al_2O_3) + (b\ SiO_2) + (c\ Na_2O) + (d\ K_2O) + (e\ CaO) + (f\ SrO) \tag{I}$$

wherein $0 < x < 1$, $0.5x < y < 3x$, $0.1x \leq a < 2x$, $0.05 \leq b \leq 0.4$, $0 < (c+d)$, and $0.5 < \{(c+d+e+f)/b\} \times 100 < 5$.

2. The honeycomb filter of claim 1, which does not exhibit a peak for crystalline $SiO_2$ in the X-ray powder diffraction spectrum for the partition wall.

3. The honeycomb filter of claim 1 or 2, wherein the catalyst includes zeolite.

4. A method for producing the honeycomb filter as defined in claim 1, comprising the steps of

   (i) molding and sintering a raw mixture that includes

      - an aluminum source containing a total amount of $Na_2O$ and $K_2O$ of 0.001-0.25 mass-%,
      - a magnesium source containing a total amount of $Na_2O$ and $K_2O$ of 0.001-0.25 mass-%,
      - a titanium source containing a total amount of $Na_2O$ and $K_2O$ of 0.001-0.25 mass-%,
      - a silicon source containing a total amount of $Na_2O$ and $K_2O$ of 0.001-0.25 mass-%,
      - a pore-forming agent,
      - a binder, and
      - a solvent,

to obtain a honeycomb sintered body, and
(ii) loading the catalyst onto at least a portion of the surface of the partition wall of the honeycomb sintered body and/or at least a portion of the pore interiors of the partition wall, to obtain a honeycomb filter.

**5.** The method of claim 4, wherein the silicon source includes $SiO_2$ at $\geq$ 95 mass-%.

**6.** The method of claim 4 or 5, wherein the silicon source includes an amorphous phase at $\geq$ 90 mass-%.

**7.** The method of any of claims 4-6, wherein the catalyst includes zeolite.

**8.** The method of any of claims 4-7, wherein the total amount of $Na_2O$ and $K_2O$ in each of the aluminum source, the magnesium source, the titanium source and the silicon source is 0.001-0.20 mass-%.

**Patentansprüche**

**1.** Wabenförmiger Filter, der eine Trennwand, die eine Vielzahl von zueinander parallelen Strömungskanälen bildet, und einen Katalysator, der auf mindestens einem Teil der Oberflächen der Trennwand und/oder auf mindestens einem Teil der Poreninnenräume der Trennwand abgestützt ist, umfasst, wobei der wabenförmige Filter eine erste Stirnfläche und eine der ersten Stirnfläche gegenüberliegende zweite Stirnfläche aufweist,
die Vielzahl der Strömungskanäle umfassen eine Vielzahl von ersten Strömungskanälen, deren Enden auf der zweiten Stirnfläche verschlossen sind, und eine Vielzahl von zweiten Strömungskanälen, deren Enden auf der ersten Stirnfläche geschlossen sind, und
das Verhältnis der elementaren Zusammensetzung von Al, Mg, Ti, Si, Na, K, Ca und Sr in der Trennwand wird durch folgende Formel (I) dargestellt:

$$Al_{2(1-x)}Mg_xTi_{(1-y)}O_5 + (a\,Al_2O_3) + (b\,SiO_2) + (c\,Na_2O) + (d\,K_2O) + (e\,CaO) + (f\,SrO) \tag{I}$$

wobei $0 < x < 1$, $0{,}5x < y < 3x$, $0{,}1x \leq a \leq 2x$, $0{,}05 \leq b \leq 0{,}4$, $0 < (c+d)$, und $0{,}5 < \{(c+d+e+f)/b\}x100 < 5$.

**2.** Wabenförmiger Filter gemäß Anspruch 1, der im Pulver-Röntgenbeugungsspektrum der Trennwand keinen Peak für kristallines $SiO_2$ aufweist.

**3.** Wabenförmiger Filter gemäß Anspruch 1 oder 2, worin der Katalysator Zeolith beinhaltet.

**4.** Verfahren zur Herstellung des wabenförmigen Filters wie in Anspruch 1 definiert, das die folgenden Schritte umfasst:

(i) Formen und Sintern einer Rohmasse, die

- eine Aluminiumquelle, die eine Gesamtmenge an $Na_2O$ und $K_2O$ von 0,001-0,25 Massen-% enthält,
- eine Magnesiumquelle, die eine Gesamtmenge an $Na_2O$ und $K_2O$ von 0,001-0,25 Massen-% enthält,
- eine Titanquelle, die eine Gesamtmenge an $Na_2O$ und $K_2O$ von 0,001-0,25 Massen-% enthält,
- eine Siliciumquelle, die eine Gesamtmenge an $Na_2O$ und $K_2O$ von 0,001-0,25 Massen-% enthält,
- ein porenbildendes Mittel
- ein Bindemittel und
- ein Lösungsmittel beinhalten, wodurch

ein wabenförmiger Sinterkörper erhalten wird, und
(ii) Laden des Katalysators auf mindestens einen Teil der Trennwand des wabenförmigen Sinterkörpers und/oder mindestens einen Teil der Poreninnenräume der Trennwand, wodurch ein wabenförmiger Filter erhalten wird.

**5.** Verfahren gemäß Anspruch 4, worin die Siliciumquelle $\geq$ 95 Massen-% $SiO_2$ enthält.

**6.** Verfahren gemäß Anspruch 4 oder 5, worin die Siliciumquelle $\geq$ 90 Massen-% einer amorphen Phase enthält.

**7.** Verfahren gemäß mindestens einem der Ansprüche 4-6, worin der Katalysator Zeolith beinhaltet.

**8.** Verfahren gemäß mindestens einem der Ansprüche 4-7, worin die Gesamtmenge an $Na_2O$ und $K_2O$ in der Alumi-

niumquelle, der Magnesiumquelle, der Titanquelle und der Siliciumquelle jeweils 0,001-0,20 Massen-% beträgt.

**Revendications**

1. Filtre en nid d'abeilles comprenant une paroi de séparation formant une pluralité de canaux d'écoulement qui sont mutuellement parallèles, et un catalyseur supporté sur au moins une portion des surfaces de la paroi de séparation et/ou sur au moins une portion des intérieurs de pore de la paroi de séparation, dans lequel le filtre en nid d'abeilles a une première face d'extrémité et une deuxième face d'extrémité située sur le côté opposé à la première face d'extrémité,

   la pluralité des canaux d'écoulement comprenant une pluralité de premiers canaux d'écoulement ayant leurs extrémités fermées sur le côté de la deuxième face d'extrémité et une pluralité de deuxièmes canaux d'écoulement ayant leurs extrémités fermées sur le côté de la première face d'extrémité, et

   le rapport de composition élémentaire en Al, Mg, Ti, Si, Na, K, Ca et Sr dans la paroi de séparation est représenté par la formule (I) :

   $$Al_{2(1-x)}Mg_xTi_{(1+y)}O_5 + (a\ Al_2O_3) + (b\ SiO_2) + (c\ Na_2O) + (d\ K_2O) + (e\ CaO) + (f\ SrO) \qquad (I)$$

   dans laquelle $0 < x < 1$, $0,5x < y < 3x$, $0,1x \leq a < 2x$, $0,05 \leq b \leq 0,4$, $0 < (c+d)$, et $0,5 < \{(c+d+e+f)/b\} \times 100 < 5$.

2. Filtre en nid d'abeilles selon la revendication 1, qui ne présente pas de pic pour le $SiO_2$ cristallin, dans le spectre de diffraction des rayons X sur poudres pour la paroi de séparation.

3. Filtre en nid d'abeilles selon la revendication 1 ou 2, dans lequel le catalyseur inclut une zéolite.

4. Procédé de production du filtre en nid d'abeilles tel que défini dans la revendication 1, comprenant les étapes consistant à

   (i) mouler et fritter un mélange brut qui inclut

   - une source d'aluminium contenant une quantité totale de $Na_2O$ et $K_2O$ de 0,001 à 0,25 % en masse,
   - une source de magnésium contenant une quantité totale de $Na_2O$ et $K_2O$ de 0,001 à 0,25 % en masse,
   - une source de titane contenant une quantité totale de $Na_2O$ et $K_2O$ de 0,001 à 0,25 % en masse,
   - une source de silicium contenant une quantité totale de $Na_2O$ et $K_2O$ de 0,001 à 0,25 % en masse,
   - un agent porogène,
   - un liant, et
   - un solvant,

   pour obtenir un corps fritté en nid d'abeilles, et

   (ii) charger le catalyseur sur au moins une portion de la surface de la paroi de séparation du corps fritté en nid d'abeilles et/ou au moins une portion des intérieurs de pore de la paroi de séparation, pour obtenir un filtre en nid d'abeilles.

5. Procédé selon la revendication 4, dans lequel la source de silicium inclut du $SiO_2$ à $\geq$ 95 % en masse.

6. Procédé selon la revendication 4 ou 5, dans lequel la source de silicium inclut une phase amorphe à $\geq$ 90 % en masse.

7. Procédé selon l'une quelconque des revendications 4 à 6, dans lequel le catalyseur inclut une zéolite.

8. Procédé selon l'une quelconque des revendications 4 à 7, dans lequel la quantité totale de $Na_2O$ et $K_2O$ dans chacune de la source d'aluminium, la source de magnésium, la source de titane et la source de silicium est 0,001 à 0,20 % en masse.

# Fig.1

(a)

(b)

# Fig.2

(a)

(b)

Fig.3

# Fig.4

(a)

(b)

*Fig.5*

(a)

(b)

Fig.6

Fig.7

**EP 2 939 992 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006239603 A
- JP 2001046886 A
- JP 2010227767 A
- EP 2239245 A1